# EUROPÄISCHE PATENTSCHRIFT

(11) **EP 0 591 287 B1**
(45) Veröffentlichungstag und Bekanntmachung des Hinweises auf die Patenterteilung: **23.08.1995**
(21) Anmeldenummer: 92912547.4
(22) Anmeldetag: 24.06.1992
(51) Int. Cl.: B29B 15/12

(54) **VERFAHREN ZUM IMPRÄGNIEREN EINES FLÄCHIGEN, FASERIGEN TRÄGERMATERIALS MIT KUNSTHARZ, SOWIE VORRICHTUNGEN ZUR DURCHFÜHRUNG DIESES VERFAHRENS**
PROCESS FOR IMPREGNATING A FLAT, FIBROUS SUBSTRATE MATERIAL WITH SYNTHETIC RESIN AND DEVICES FOR IMPLEMENTING IT
PROCEDE D'IMPREGNATION D'UN SUBSTRAT FIBREUX PLAT AVEC UNE RESINE SYNTHETIQUE ET DISPOSITIFS DE MISE EN OEUVRE DU PROCEDE

(30) Priorität: 24.06.1991 AT 1261/91
(43) Veröffentlichungstag der Anmeldung: 13.04.1994
(73) Patentinhaber: ISOVOLTA Österreichische Isolierstoffwerke Aktiengesellschaft, 2355 Wiener Neudorf (AT)
(72) Erfinder: PAYER, Helmut, A-2344 Maria Enzersdorf (AT)
(86) Internationale Anmeldenummer: AT9200080
(87) Internationale Veröffentlichungsnummer: WO9300209

(56) Entgegenhaltungen:
- EP-A- 0 041 849
- EP-A- 0 150 570
- PATENT ABSTRACTS OF JAPAN vol. 8, no. 146 (M-307) 7. Juli 1984 & JP,A,59 042 923 (MATSUSHITA DENKO KK) 9. März 1984
- DATABASE WPIL Section Ch, Week 8325, Derwent Publications Ltd., London, GB; Class A, AN 83-59678K & JP,A,58 078 724 (TOKYO SHIBABURA ELEC LTD) 12. Mai 1983
- DATABASE WPIL Section Ch, Week 8951, Derwent Publications Ltd., London, GB; Class A, AN 89-375599 & JP,A,1 283 141 (AIKA KOGYO CO LTD) 14. November 1989

## Beschreibung

### Technisches Gebiet

Die Erfindung betrifft ein Verfahren zum Imprägnieren eines flächigen, faserigen Tragermaterials, bei dem ein niedrigviskoses, flüssiges Kunstharz das Trägermaterial durchdringt, sowie Vorrichtungen zur Durchführung dieses Verfahrens

### Stand der Technik

Es ist nun bekannt, für eine ausreichende Imprägnierung eines Trägermaterials die Viskosität des zu beauftragenden Harzes zu erniedrigen. Dies erfolgt beispielsweise durch Zusatz von Lösungsmitteln wie Wasser oder Alkohole. Die Zugabe von Wasser in das Harzgemisch bewirkt insbesondere beim Einsatz von Papier das Quellen des Trägermaterials. Die für das Quellen notwendigen, großen Lösungsmittelmengen müssen nach dem Imprägnierschritt verdampfen gelassen werden; daher entstehen längere Durchlaufzeiten durch den Trockner, wodurch die Kapazität der Imprägniermaschine limitiert wird.

Ferner ist es aus der JP-A-59042923 bekannt, eine Viskositätserhöhung während des Imprägniervorganges dadurch zu vermeiden, daß das Verdampfen der Lösungsmittel aus der Imprägnierwanne durch die Maßgabe einer Abdeckung unterbunden wird. Dabei wird das zu imprägnierende Trägermaterial über eine Schöpfwalze, welche in die Imprägnierwanne eintaucht, geführt und anschließend über Umlenkwalzen in die Harzwanne rückgeführt.

### Darstellung der Erfindung

Aufgabe der Erfindung ist es, ein Verfahren anzugeben, worin die Lösungsmittelmenge und somit die Trocknungszeit reduziert wird und wodurch die Durchlaufzeiten durch den Trockner verkürzt werden.

Die der Erfindung zugrunde liegende Aufgabe wird in dem erfindungsgemäßen Verfahren dadurch gelöst, daß die Trägermaterialbahn mit an sich bekannten Mitteln vorgewärmt und daraufhin gegebenenfalls über eine beheizte Anreibewalze, die durch Berührung der in einer Tränkwanne befindlichen niedrigviskosen, wasserhältigen Kunstharzlösung an ihrer Oberfläche mit dieser gleichmäßig benetzt wird, wobei die niedrigviskose, wasserhältige Kunstharzlösung gleichmäßig erwärmt wird und zumindest ein Teil des Kunstharzes in die Oberfläche der Trägermaterialbahn eindringt, geführt wird und daß anschließend die mit Kunstharz beaufschlagte Trägermaterialbahn völlig durchtränkt wird und daß die mit Kunstharz getränkte Trägermaterialbahn anschliessend eine Dosiereinrichtung und einen Trockenkanal, in welchem die Lösungsmittel der von der Trägermaterialbahn aufgenommenen, wasserhältigen Kunstharzlösung in einem Heißluftstrom zum größten Teil abgedampft werden, passiert und mit einer Schneideeinrichtung in flächige Stücke abgelängt und auf einer Stapeleinrichtung gestapelt wird.

Die wasserhältige Kunstharzlösung enthält vorteilhafterweise 0 - 30 Gew.% niedrige Alkohole.

Die Temperatur der Anreibewalze wird vorteilhaft in einem Bereich von 40 bis 120°C konstant gehalten.

Die Trägermaterialbahn wird vorteilhafterweise auf eine Temperatur in einem Bereich von 40 bis 95°C vorerwärmt wobei diese Vorerwärmung beispielsweise mit Hilfe einer beheizten Walze durchgeführt werden kann. Die in der Tränkwanne befindliche wasserhältige, niedrigviskose Kunstharzlösung kann vorteilhafterweise eine auf Basis eines Aminoplast-, im wesentlichen Melaminharzes sein, die auf Raumtemperatur während des Verfahrens gehalten wird. Der Anteil an Aminoplast bzw. Melaminharz beträgt dabei vorteilhafterweise 45 bis 65 Gew.%, der Anteil an wasserhältigen Lösungsmittel 35 bis 55 Gew.%.

Als Kunstharz kann weiters vorteilhafterweise eines auf Basis eines Phenol-Formaldehydharzes ausgewählt werden, wobei dessen Anteil in der Lösung 45 bis 80 Gew.% beträgt und der Anteil an wasserhältigen Lösungsmitteln 55 bis 20 Gew.%. Die Kunstharzlösung auf Basis eines Phenol-Formaldehydharzes wird vorteilhafterweise während des Verfahrens mittels eines Temperaturregelkreises innerhalb eines Temperaturbereiches von 30 bis 80°C, bevorzugt von 40 bis 50°C konstant gehalten. Wird als Kunstharz eines auf Basis eines Aminoplastharzes, im wesentlichen Melaminharzes, gewählt, so besteht die Vorrichtung zur Durchführung des erfindungsgemäßen Verfahrens aus mehreren Einrichtungen für die Zuführung und Umlenkung der Trägermaterialbahn, aus einer Vorwärmwalze, aus einer beheizbaren Anreibewalze und einer Tränkwanne, wobei oberhalb der Tränkwanne in einem Abstand von 1 bis 2 m Umlenkwalzen angeordnet sind. Weiters besteht diese Vorrichtung aus einer Dosiereinrichtung, einem Trockenkanal, einer Schneideeinrichtung und einer Stapeleinrichtung. Die Vorrichtung zur Durchführung des erfindungsgemäßen Verfahrens unter Verwendung eines Phenol-Formaldehydharzes in der niedriviskosen Kunstharzlösung besteht vorteilhafterweise aus mehreren Einrichtungen für die Zuführung und Umlenkung der Trägermaterialbahn, aus einer Vorwärmewalze, einer beheizbaren Anreibewalze, einer Tränkwanne sowie aus einem an die Tränkwanne angeschlossenen Temperaturregelkreis, einer Dosiereinrichtung, einem Trockenkanal , einer Schneideeinrichtung und einer Stapeleinrichtung.

### Beschreibung der Figuren

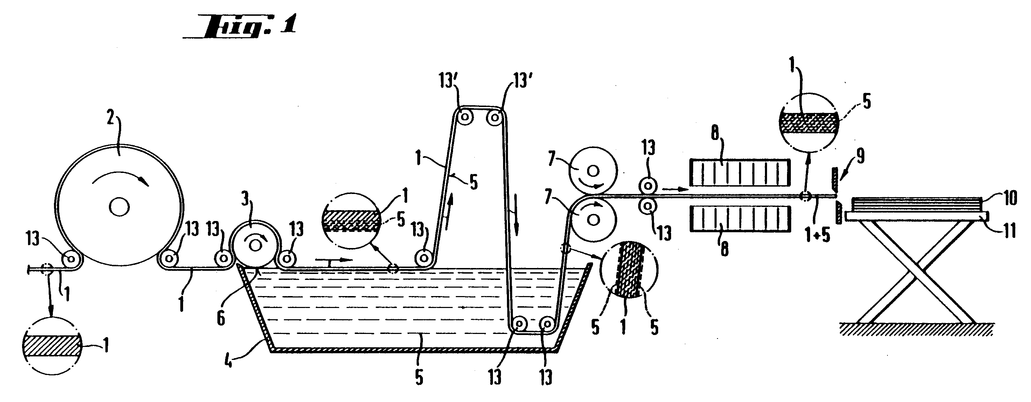

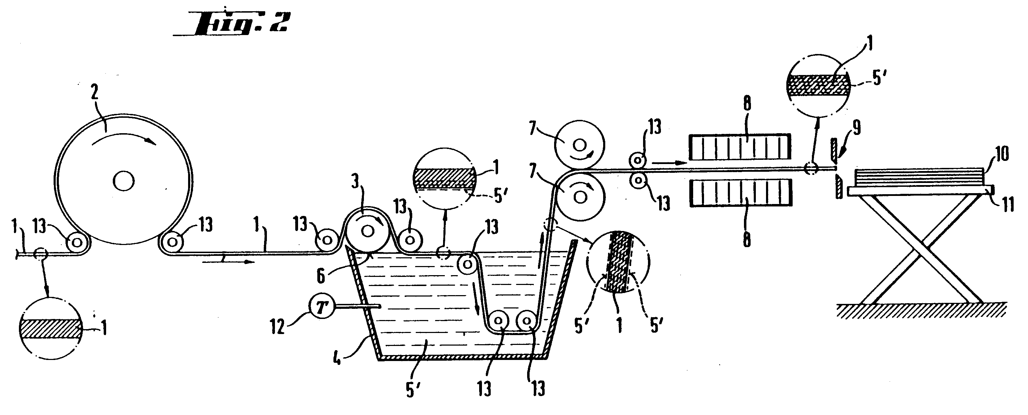

Die Erfindung wird nachstehend anhand der Fig.1 und 2 sowie zweier Ausführungsbeispiele dokumentiert.

Fig. 1 zeigt mehrere Einrichtungen 13 für die Zuführung und Umlenkung der Trägermaterialbahn 1 sowie eine Vorwärmewalze 2, eine beheizbare Anreibewalze 3, eine Tränkwanne 4 sowie Umlenkrollen 13', die in einem Abstand von 1 bis 2 m oberhalb der Tränkwanne 4 angeordnet sind, eine Dosiereinrichtung 7, einen Trockenkanal 8, eine Schneideeinrichtung 9 und eine Stapeleinrichtung 11.

Fig. 2 zeigt mehrere Einrichtungen 13 für die Zuführung und Umlenkung der Materialbahn 1, eine Vorwärmewalze 2, eine beheizbare Anreibewalze 3, eine Tränkwanne 4 sowie einen an die Tränkwanne angeschlossenen Temperaturregelkreis 12, eine Dosiereinrichtung 7, einen Trockenkanal 8 sowie eine Schneideeinrichtung 9 und eine Stapeleinrichtung 11.

### Einige Wege zur Ausführung der Erfindung

### Beispiel 1:

Durchführung des erfindungsgemäßen Verfahrens unter Verwendung einer niedrigviskosen, wasserhältigen Kunstharzlösung auf Basis eines Aminoplasts, im wesentlichen Melaminharzes 5: Durch Verdünnen mit Wasser und Methanol wird ein Melaminharz auf einen Festkörpergehalt von 51% eingestellt. Die Viskosität dieser Imprägnierharzlösung wurde mit Hilfe eines DIN-Bechers gemessen; der ermittelte Wert lag zwischen 16 und 17 sec. Diese Lösung wurde bei Raumtemperatur in die Tränkwanne 4 übergeführt.

Es wurde eine Papierbahn 1 mit einer Geschwindigkeit von 100 m/min über die Vorwärmwalze 2 geführt, deren Temperatur auf 175°C gehalten wurde. Dadurch konnte eine Papiervorwärmung auf 95°C bewirkt` werden. Diese vorervärmte Papierbahn wird über die Anreibewalze 3 geführt, die eine Temperatur von 50°C aufweist und mit ihrer Oberfläche 6 Harz aufnimmt. Anschließend wird die Papierbahn an der Oberfläche der Harzlösung 5, die auf Raumtemperatur gehalten wird, gefuhrt und dabei auf 30°C abgekühlt. Diese aus Fig. 1 ersichtliche Wegstrecke zwischen den Umlenkrollen 13 bewirkt ein teilweises Durchdringen der Trägermaterialbahn mit dem Kunstharz. Ein zusätzliches Durchdringen wird insofern gewährleistet, daß die vorimprägnierte Trägermaterialbahn während der. Weglänge zwischen den Umlenkrollen 13 und 13' gemäß Fig. 1 sowie zwischen den Umlenkrollen 13' und der Oberfläche der Kunstharzlösung 5 an der Luft getrocknet wird. Bedingt durch die chemische Struktur des Melaminharzes 5 ist dies insofern notwendig, um ein Durchdringen der Fasern innerhalb dieser verlängerten Wegstrecke zu gewährleisten. Die vollständige Imprägnierung erfolgt schließlich in der Tränkwanne 4 selbst durch völliges Eintauchen in das Harzbad 5. Das überschüssige Harz wird mittels der Dosiereinrichtung 7 von der Oberfläche des nunmehr entstandenen Verbundes abgestreift. Die durch die wasserhältigen Lösungsmittel bedingten wässerigen Anteile werden im Trockenkanal 8 verdampft. Die Verbunde werden bei 9 abgelängt und auf der Stapeleinrichtung 11 aufgestapelt (10). Sie können anschließend für die Herstellung von dekorativen Deckschichten auf Schichtpreßstoffen verwendet werden, wenn ein Harzauftrag von beispielsweise von 90 bis 250% eingestellt wird.

### Beispiel 2:

Durchführung des erfindungsgemäßen Verfahrens unter Einsatz einer niedrigviskosen` wasserhältigen Phenol-Formaldehydharzlösung 5': Durch mehrmaliges Verdünnen mit Wasser und Methanol wird ein Festkörpergehalt von 71% des Phenol-Formaldehydharzes erzielt. Die Viskosität dieser Lösung betrug bei 40°C 165 mPa.s. Diese niedrigviskose Lösung wurde in die Tränkwanne 4 übergeführt und die Temperatur von 40°C mit Hilfe der Temperaturregelung 12 konstant gehalten. Gemäß Fig. 2 wird eine Trägermaterialbahn 1 über Umlenkrollen 13 über die Vorwärmwalze 2 geführt, deren Temperatur auf 175°C eingestellt wird. Die Papiervorwärmung beträgt daher nach der Vorwärmwalze ca. 95°C. Anschließend wird die vorerwärmte Papierbahn über eine Anreibewalze 3, deren Temperatur auf 80°C konstant gehalten wird, geführt. Weiters wird die papierbahn an der Oberfläche der Harzlösung 5' geführt, wobei sie bereits auf 60°C abgekühlt ist. Diese Weglänge gemäß Fig. 2 ist insofern notwendig, damit das Kunstharz bereits teilweise in die papierbahn eindringen kann. Die vollständige Durchdringung erfolgt insofern, daß die vorimprägnierte papierbahn 1 durch die Kunstharzlösung 5' geführt wird. Für die Durchführung dieses Verfahrens wird eine kleine Harzwanne 4 verwendet, um das Phenol-Formaldehydharz während des Imprägnierschrittes nur kurzzeitig thermisch zu belasten. Das überschüssige Harz wird wiederum bei der Dosiereinrichtung 7 entfernt, die während der Imprägnierung aufgenommenen wasserhäl tigen Lösungsmittel werden im Trockenkanal 8 entfernt, die Verbunde bei 9 abgelängt und auf 11 aufgestapelt (10). Die Verbunde 9 können beispielsweise als technische Isolierstoffe eingesetzt werden, wenn ein Harzauftrag von 50 bis 100% eingestellt wird.

### Gewerbliche Verwertbarkeit

Die durch das erfindungsgemäße Verfahren erzeugten Verfahrensprodukte können als Verbunde für die Herstellung von technischen Isolierstoffen sowie von Kernschichten dekorativer Schichtpreßstoffe verwendet werden.

## Patentansprüche

1. Verfahren zum Imprägnieren eines flächigen, faserigen Trägermaterials, bei dem ein niedrigviskoses, flüssiges Kunstharz das Trägermaterial durchdringt, wobei ein Teil des Kunstharzes in Form eines dünnen, gleichmäßigen Films, insbesondere über einer Walze an eine Seite des Trägermaterials vor dem Tränkimprägnierungsschritt aufgetragen wird, dadurch gekennzeichnet, daß die Trägermaterialbahn (1) mit an sich bekannten Mitteln (2) vorgewärmt und daraufhin über eine beheizte Anreibewalze (3), die durch Berührung der in einer Tränkwanne (4) befindlichen niedrigviskosen, wasserhältigen Kunstharzlösung (5, 5') an ihrer Oberfläche (6) mit dieser gleichmäßig benetzt wird, wobei die auf eine höhere Temperatur erwärmte niedrigviskose, wäßrige Kunstharzlösung in die Oberfläche der Tragermaterialbahn (1) eindringt, und das Porenvolumen des Trägermaterials zumindest teilweise ausfüllt, geführt wird und daß anschließend die mit Kunstharz beaufschlagte Trägermaterialbahn in einer Tränkwanne völlig durchtränkt wird und daß die mit Kunstharz getränkte Trägermaterialbahn anschliessend eine Dosiereinrichtung (7) und einen Trockenkanal (8), in welchen die Lösungsmittel der von der Trägermaterialbahn aufgenommenen, wasserhältigen Kunstharzlösung in einem Heißluftstrom zum größten Teil abgedampft werden, passiert und mit einer Schneideeinrichtung (9) in flächige Stücke (10) abgelängt und auf einer Stapeleinrichtung (11) gestapelt wird.

2. Verfahren nach Anspruch 1, dadurch gekennzeichnet, daß die wasserhältige Kunstharzlösung (5, 5') 0 bis 30 Gew.% niedrige Alkohoie enthält.

3. Verfahren nach Anspruch. 1 oder 2, dadurch gekennzeichnet, daß die Temperatur der Anreibewalze (3) in einem Bereich von 40 bis 120°C konstant gehalten wird.

4. Verfahren nach einem der Ansprüche 1 bis 3, dadurch gekennzeichnet, daß die Trägermaterialbahn (1) auf eine Temperatur im Bereich von 40 bis 95°C vorerwärmt wird.

5. Verfahren nach einem der Ansprüche 1 bis 4, dadurch gekennzeichnet, daß die Trägermaterialbahn (1) mit einer beheizten Walze (2) vorerwärmt wird.

6. Verfahren nach einem der Ansprüche 1 bis 5, dadurch gekennzeichnet, daß die in der Tränkwanne (4) befindliche wasserhältige, niedrigviskose Kunstharzlösung (5) 45 bis 65 Gew.% Aminoplast-, im wesentlichen Melaminharz und 35 bis 55 Gew.% wasserhältige Lösungsmittel enthält.

7. Verfahren nach Anspruch 6, dadurch gekennzeichnet, daß die Kunstharzlösung (5) auf Raumtemperatur gehalten wird.

8. Verfahren nach einem der Ansprüche 1 bis 5, dadurch gekennzeichnet, daß die in der Tränkwanne (4) befindliche wasserhältige, niedrigviskose Kunstharzlösung (5') 45 bis 80 Gew.% Phenol-Formaldehydharz und 20 bis 55 Gew.% wasserhäitige Lösungsmittel enthält.

9. Verfahren nach Anspruch 8, dadurch gekennzeichnet, daß die Temperatur der niedrigviskosen Kunstharzlösung (5') mittels eines Temperaturregelkreises (12) innerhalb von 30 bis 80°C, bevorzugt von 40 bis 50°C, konstant gehalten wird.`

10. Vorrichtung zur Durchführung eines Verfahrens nach Anspruch 6 oder 7, gekennzeichnet durch mehrere Einrichtungen (13), für die Zuführung und Umlenkung der Trägermaterialbahn (1) und durch eine Vorwärmwalze (2), eine beheizbare Anreibewalze (3), eine folgende hintereinander angeorduete weitere Elemente: Tränkwanne (4), in einem Abstand von 1 bis 2 m oberhalb der Tränkwanne (4) angeordnete Umlenkwalzen (13'), eine Dosiereinrichtung (7), einen Trockenkanal (8), eine Schneideeinrichtung (9) und eine Stapeleinrichtung (11).

11. Vorrichtung zur Durchführung eines Verfahrens nach Anspruch 8 oder 9, gekennzeichnet durch mehrere Einrichtungen (13) für die Zuführung und Umlenkung der Matarialbahn (1) und durch folgende hintereinander angeordnete weitere Elemente: eine Vorwärmewalze (2), eine beheizbare Anreibewalze (3), eine Tränkwanne (4), einen an die Tränkwanne angeschlossenen Temperaturregelkreis (12), eine Dosiereinrichtung (7), einen Trockenkanal (8), eine Schneideeinrichtung (9) und eine Stapeleinrichtung (11).

## Claims

1. A method for impregnating a flat, fibrous substrate penetrated by a low-viscosity, fluid synthetic resin, a part of which is deposited in particular by means of a roller as a thin and uniform film on one side of the substrate prior to the immersion-impregnation procedure, characterized in that the substrate web 1 is preheated using means 2 known per se and next is made to pass over a heated friction roller 3 uniformly wetted at its surface 6 by being in contact with the lowviscosity, aqueous solution of synthetic resin 5, 5' present in a bath 4, the low-viscosity, aqueous synthetic-resin solution raised to a higher temperature penetrating the surface of the substrate web 1 and at least partly fills the pore volume of the substrate, and in that thereupon the synthetic-resin soaked substrate web is completely penetrated in a bath and that the synthetic-resin soaked substrate web thereafter passes over a metering device 7 and through a drying channel 8 wherein the solvents of the aqueous synthetic-resin solution absorbed by the substrate web are for the most part evaporated in a flow of hot air, and in that said web then is cut to size in flat pieces 10 in cutting means 9 and is stacked in stacking means 11.

2. Method defined in claim 1, characterized in that the aqueous solution of synthetic resin 5,5' contains lower alcohols in proportions from 0 to 30%-weight.

3. Method defined in either of claims 1 and 2, characterized in that the temperature of the friction roller is kept constant in the range from 40 to 120°C.

4. Method defined in one of claims 1 through 3, characterized in that the substrate web 1 is preheated to a temperature in the range of 40 to 96°C.

5. Method defined in one of claims 1 through 4, characterized in that the substrate web 1 is preheated by a heated roller 2.

6. Method defined in one of claims 1 through 5, characterized in that the aqueous, low-viscosity synthetic-resin solution 5 present in the bath 4 contains from 45 to 65%-weight of aminoplastic resin, substantially melamine resin, and from 35 to 55%-weight of aqueous solvents.

7. Method defined in claims 6, characterized in that the synthetic-resin solution 5 is kept at room temperature.

8. Method defined in one of claims 1 through 5, characterized in that the aqueous, low-viscosity synthetic-resin solution 5' in the bath 4 contains 45 to 80%-weight of phenol-formaldehyde resin and 20 to 55%-weight of aqueous solvents.

9. Method defined in claim 8, characterized in that the temperature of the aqueous, low-viscosity synthetic-resin solution 5' is kept constant by a temperature-regulating circuit 12 in the range of 30 to 80°C, preferably 40 to 50°.

10. Apparatus with which to carry out the method of either of claims 6 and 7, characterized by several devices 13 to feed and change the direction of the substrate web 1, and by the further following, one after the other arranged elements: a preheating roller 2, heated friction roller 3, a bath 4, the direction-changing rollers 13' mounted 1 to 2 meters above the bath 4, a metering device 7, a drying channel 8, cutting means 9 and stacking means 11.

11. Apparatus with which to carry out the method of either of claims 8 and 9, characterized by several devices 13 to feed and change the direction of the substrate web 1, and by the further following, one after the other arranged elements: a preheating roller 2, a heated friction roller 3, a bath 4, a temperature-regulating curcuit 12 connected to the bath, a metering device 7, a drying channel 8, cutting means 9 and stacking means 11.

## Revendications

1. Procédé pour imprégner un matériau support plat et fibreux, dans lequel une résine synthétique liquide à faible viscosité pénétre à travers le matériau support, une partie de la résine synthétique étant appliquée sous la forme d'un mince film régulier, notamment par l'intermédiaire d'un cylindre d'enroulement, sur une face du matériau support, avant l'étape d'imprégnation au trempé, caractérisé en ce que l'on fait passer la bande de matériau support (1), préchauffée par des moyens (2) connus en eux-mêmes, sur un cylindre de recouvrement chauffé (3) qui, par contact avec la solution de résine synthétique (5, 5') à faible viscosité, contenant de l'eau et se trouvant dans une cuve d'imprégnation (4), est mouillé régulièrement sur sa surface (6) par une solution de résine synthétique aqueuse à faible viscosité et réchauffée à une température élevée, qui pénétre à travers la surface de la bande de matériau support (1) et remplit au moins partiellement les volumes poreux du matériau support, en ce qu'ensuite, on imprègne complètement dans une cuve d'imprégnation la bande de matériau support avec de la résine synthétique, et en ce qu'on fait ensuite passer la bande de matériau support imprégnée de résine synthétique dans un organe de dosage (7) et dans un canal de séchage (8) dans lequel les solvants de la solution de résine synthétique absorbé par la bande de matériau support et contenant de l'eau, sont pour la plus grande part évapores dans un courant d'air chaud, et en ce qu'on tronçonne à longueur la bande avec un organe de découpage (9) en pièces plates (10) et on l'empile sur un organe d'empilage (11).

2. Procédé selon la revendication 1, caractérisé en ce que la solution de résine synthétique contenant de l'eau (5,5') contient de 0 à 30% en poids d'alcools inférieurs.

3. Procédé selon la revendication 1 ou 2, caractérisé en ce que l'on maintient constante la température du cylindre de recouvrement (3) dans un intervalle de 40 à 120°C.

4. Procédé selon l'une des revendications 1 à 3, caractérisé en ce que l'on préchauffe la bande de matériau support (1) à une température comprise entre 40 et 95°C.

5. Procédé selon l'une des revendications 1 à 4, caractérisé en ce que l'on préchauffe la bande de matériau support (1) à l'aide d'un cylindre de laminage chauffé (2).

6. Procédé selon l'une des revendications 1 à 5, caractérisé en ce que la solution de résine synthétique (5) à faible viscosité contenant de l'eau et se trouvant dans la cuve d'imprégnation (4), contient de 45 à 65% en poids d'un aminoplaste, pour l'essentiel de résine mélaminique, et de 35 à 55% en poids de solvant contenant de l'eau.

7. Procédé selon la revendication 6, caractérisé en ce que l'on maintient à la température ambiante la solution (5) de résine synthétique.

8. Procédé selon l'une des revendications 1 à 5, caractérisé en ce que la solution de résine synthétique à faible viscosité (5') contenant de l'eau et se trouvant dans la cuve d'imprégnation (4) contient de 45 à 80% en poids de résine phénolformaldéhyde, et de 20 à 55% en poids de solvant contenant de l'eau.

9. Procédé selon la revendication 8, caractérisé en ce qu'à l'aide d'un circuit de réglage de température (12), on maintient la température de la solution de résine synthétique à faible viscosité (5'), constante entre 30 et 80°C, de préférence entre 40 et 50°C.

10. Dispositif pour la mise en oeuvre d'un procédé selon la revendication 6 ou 7, caractérisé par plusieurs organes (13) pour l'amenée et la déviation de la bande de matériau support (1) et par d'autres éléments disposés en se suivant l'un derrière l'autre: un cylindre de préchauffage (2), un cylindre de recouvrement (3) susceptible d'être chauffé, une cuve d'imprégnation (4), des cylindres de déviation (13') disposés à une distance de 1 à 2 m au-dessus de la cuve d'imprégnation (4), un organe de dosage (7), un canal de séchage (8), un organe de découpage (9), et un organe d'empilage (11).

11. Dispositif pour la mise en oeuvre d'un procédé selon la revendication 8 ou 9, caractérisé par plusieurs organes (13) pour l'amenée et la déviation de la bande de matériau (1) et par d'autres éléments disposés en se suivant l'un derrière l'autre: un cylindre de préchauffage (2), un cylindre de recouvrement (3) susceptible d'être chauffé, une cuve d'imprégnation (4), un circuit de réglage de température (12) relié à la cuve d'imprégnation, un organe de dosage (7) , un canal de séchage (8), un organe de découpage (9) et un organe d'empilage (11).
